# EUROPEAN PATENT APPLICATION

(11) **EP 4 339 328 A1**
(43) Date of publication of application: **20.03.2024**
(21) Application number: 22306363.7
(22) Date of filing: 16.09.2022
(51) Int. Cl.: C25B 1/04, C25B 15/025, C25B 15/027, C25B 15/08, G01N 21/59, H01M 8/04291

(54) **SENSOR DEVICE FOR MONITORING A WATER ELECTROLYSIS INSTALLATION, TO BE PLACED INSIDE A FLUID OF THE WATER ELECTROLYSIS INSTALLATION, RELATED INSTALLATION AND METHOD**

(71) Applicant: TOTALENERGIES ONETECH, 92400 Courbevoie (FR)
(72) Inventor: DUBOUIS, Nicolas, 75011 PARIS (FR); AYME-PERROT, David, 60190 ARSY (FR)
(74) Representative: Lavoix

(57) **Abstract**

The sensor device comprises:
- at least one optical fiber probe (50) having a sensing region (52);
- a light source apparatus providing an input light to the optical fiber probe (50);
- a processing apparatus (56) for processing an output light emitted by the optical fiber probe (50) after receiving the input light from the light source apparatus; characterized by :
- a temperature sensor (60) and/or a pressure sensor (58) located in the vicinity of the sensing region (52) to measure a temperature and/or pressure of the fluid in contact with the sensing region (52), the temperature sensor (60) and/or pressure sensor (58) being connected to the processing apparatus (56) for processing simultaneously the output light and the measured fluid temperature and/or pressure.

## Description

The present invention concerns a sensor device for monitoring a water electrolysis installation, to be placed inside a fluid of the water electrolysis installation, the device comprising:
- at least one optical fiber probe having a sensing region to be placed inside the fluid;
- a light source apparatus providing an input light to the optical fiber probe ;
- a processing apparatus for processing an output light emitted by the optical fiber probe after receiving the input light from the light source apparatus.

The water electrolysis installation, which comprises an electrochemical device (the stack) with a balance of plant (or "process unit"), is in particular equipped with an optical fiber-based sensor to determine in operando and in real time the state of the water electrolysis installation.

Electrolyzers are incorporated inside a water electrolysis installation to convert water into hydrogen and oxygen using an electrical current.

They generally comprise stacks of several electrochemical cells. In each cell, dihydrogen is produced at a negative electrode separated by a membrane from the positive electrode where dioxygen is produced

The gas mixture of oxygen and dihydrogen is highly inflammable. In some instances, the mixing of these two gases can lead to catastrophic explosions susceptible of causing material and/or human damages.

For example, if the membrane separating the electrodes degrades, a through passage may form in the membrane. Gas crossover can occur allowing a mix of the two gas.

Degradation of the membrane may result from sludge produced within at least an electrolyte fed from the balance of plant, which can therefore lead to locally overheating and/or damaging the membrane.

Monitoring the state of the electrolyte within an electrochemical device, between two electrodes is known from WO 2022 037589 A1. The state of health of the electrochemical device is assessed with an optical fiber probe localized within the electrochemical device.

Such a monitoring is not entirely satisfactory. Indeed, the fluids which are monitored in the water electrolysis installation undergo different physical conditions in particular in terms of composition, temperature and pressure.

The sludge detection may in some instances be affected by the variations of the physical condition of the monitored fluids, leading to false sludge detections or on the contrary lack of detection of sludge formation. Suitable fluids comprise water and/or degassed water.

One aim of the invention is to obtain a safer and more reliable water electrolysis installation, without affecting the productivity of the electrochemical reactions taking place therein.

To this aim, the subject matter of the invention is a sensor device of the above mentioned type, characterized in that:
- a temperature sensor and/or a pressure sensor located in the vicinity of the sensing region to measure a temperature and/or pressure of the fluid in contact with the sensing region, the temperature sensor and/or pressure sensor being connected to the processing apparatus for processing simultaneously the output light and the measured fluid temperature and/or pressure.

The sensor device according to the invention may comprise one or more of the following feature(s), taken alone, or according to any technical feasible combination:
- the processing apparatus measures at least an information representative of sludge formation in the vicinity of the optical fiber probe;
- the information representative of sludge formation is a fluid turbidity within the measured fluid;
- it comprises at least two optical fiber probes, at least one optical fiber probe having a local axis of its sensing region inclined or orthogonal to a local axis of the sensing region of at least one other optical fiber probe, the same processing apparatus processing the output lights coming from the at least two optical fibers.

The invention also concerns a water electrolysis installation comprising:
- an electrochemical device comprising at least a stack having at least two electrodes immersed in an electrolyte that generates electricity from a chemical reaction or uses electrical energy to cause a chemical reaction and having at least a separator separating the two electrodes;
- a balance of plant comprising fluid handling components including pipes and tanks defining an inner fluid handling volume of the balance of plant to convey an incoming fluid to the electrochemical device and to recover an outcoming fluid from the electrochemical device;
- the sensor device as defined above.

The installation according to the invention may comprise one or more of the following feature(s), taken alone, or according to any technical feasible combination:
- the sensor device is located inside the inner fluid handling volume of the balance of plant outside of the electrochemical device;
- the sensor device is placed at a distance of the electrodes of the electrochemical device greater than 10 cm, in particular greater than 1 m;
- the sensor device is placed inside the electrochemical device immersed in the electrolyte and the temperature and/or pressure sensor are measuring the temperature and/or pressure inside the electrochemical device, in particular between the two electrodes.

The invention also concerns a method for monitoring the formation of sludge in a fluid of an installation as defined above, the method comprising the steps of:
- sending an input light from the light source apparatus to the optical fiber probe;
- emitting back an output light from the optical fiber probe to the processing apparatus;
- measuring the temperature and/or pressure with the temperature sensor and/or the pressure sensor and sending the information to the processing apparatus;
- processing the output light in the processing apparatus using the measured temperature and/or the measured pressure to obtain an information representative of sludge formation in the fluid.

The invention will be better understood, based on the following description, made in reference to the amended drawings, in which:
- figure 1 is a schematic representation of a first water electrolysis installation according to the invention;
- figure 2 is a schematic representation of a second water electrolysis installation according to the invention;
- figure 3 is schematic view of a pipe inside the balance of plant of an water electrolysis installation according to the invention.

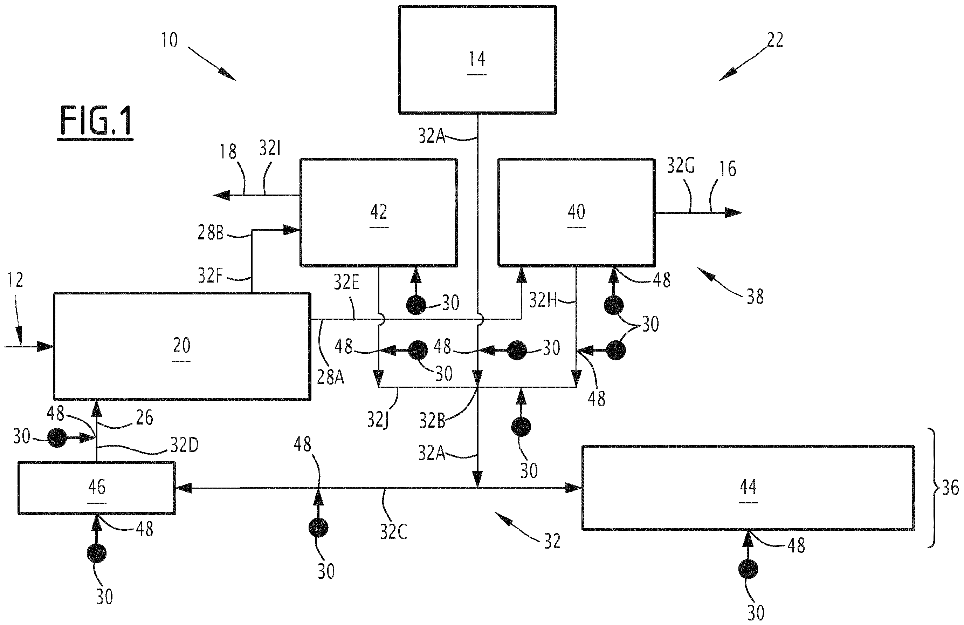

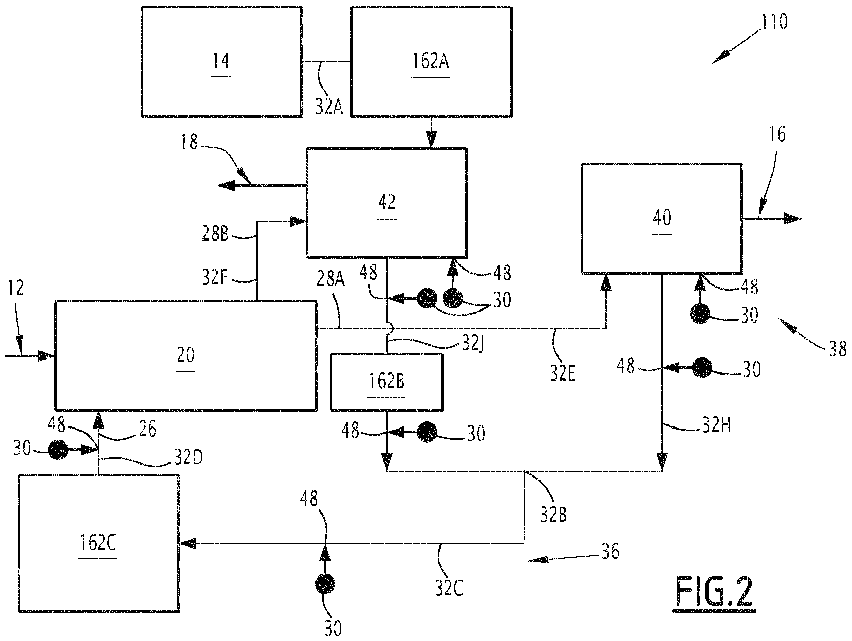

A first water electrolysis installation 10 according to the invention is schematically shown in figure 1. The installation 10 is connected to an electric source 12 and to a water source 14 for the production of dihydrogen 16 and dioxygen 18. In a first embodiment, represented in figure 1, the water electrolysis installation 10 is carrying out alkaline water electrolysis. In figure 2, another water electrolysis installation 110 is represented and will be described later on.

The electric source 12 is for example a renewable energy source, such as a solar farm, a tidal farm or a wind farm, or is a battery system, a power grid or any device supplying electricity.

The installation 10 comprises an electrochemical stack device 20, where the electrochemical reactions take place, and a balance of plant 22 connected to the electrochemical stack device 20, the balance of plant 22, comprising various fluid handling components, including pipes, reservoirs, tanks, separators which will be described below.

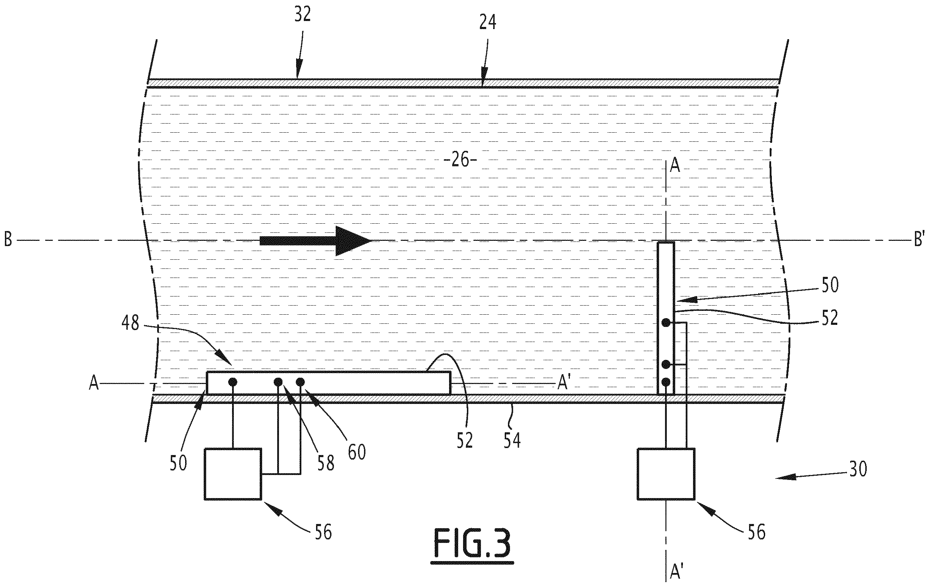

The balance of plant 22 defines an inner fluid handling volume 24 (see figure 3) to convey an incoming fluid 26 to the electrochemical stack device 20 and to recover outcoming fluids 28A, 28B from the electrochemical stack device 20.

The installation 10 comprises at least a sensor 30 measuring an information representative of a sludge formation, to detect the formation of sludge resulting for example from a degradation occurring in the water electrolysis installation 10.

Sludge formation may result from delamination of electrodes in the electrochemical stack device 20, from material dissolution leading to undesired precipitations and/or from fluid aging within the electrochemical stack device 20 or the inner fluid handling volume 24 of the balance of plant 22. Sludge formation may also result from a contamination from the ambient atmosphere, for example CO₂ absorption.

According to the invention, each sensor 30 measures information inside the inner fluid handling volume 24 of the balance of plant 22.

The electrochemical stack device 20 comprises at least a stack of electrochemical cells, a frame receiving each stack and an outer enclosure containing the frames.

Each cell comprises at least two electrodes immersed in an electrolyte. The two electrodes may be separated by one or more separator. The cells are for example arranged in rows defining the stack.

One electrode is a cathode, charged negatively where the dihydrogen is produced and the other is an anode. An electrolysis of water takes place by providing water and electricity to the cells.

The separator comprises a membrane that lets through ions or protons depending on the type of the electrochemical stack device 20 while preventing fluids present at each electrode, in particular dihydrogen and dioxygen produced at each electrode, to contact each other. The separator is an electron insulator, it ensures the absence of short-circuit.

The membrane is generally a polymer membrane, for example a PVDF membrane or a composite material made of a polymer material and of an inorganic material (for example polysulfone and zirconia), or asbestos, or a proton conducting membrane (for instance Nafion), on an anion conducting membrane.

The enclosure receives a supply of electricity from the electric source 12 and also receives incoming fluid 26, in particular a water-based electrolyte, the electricity and incoming fluid 26 being split among the stacks.

Outcoming fluids 28A, 28B, here water containing dihydrogen and water containing dioxygen are gathered from the stacks and are recovered outside the enclosure.

The enclosure thus defines at least an incoming fluid 26 supply inlet and at least two outcoming fluid 28A, 28B recovery outlets, through which it is connected to the balance of plant 22.

The balance of plant 22 comprises fluid handling components including pipes 32 transporting fluids in the inner fluid handling volume 24 of the balance of plant 22.

The fluids are for example supply water, electrolyte, water containing dihydrogen, or water containing dioxygen.

The balance of plant 22 imports water from the water source 14 to the water electrolysis installation 10 to produce and supply electrolyte to the electrochemical stack device 20 and exports dihydrogen 16 and dioxygen 18 produced in the electrochemical stack device 20 outside of the water electrolysis installation 10.

Advantageously, the balance of plant 22 also comprises a downstream dihydrogen 16 treatment stage and/or a dioxygen 18 treatment stage that are not represented in figure 1.

The balance of plant 22 comprises an upstream circuit 36 to prepare and feed incoming fluid 26 to the electrochemical stack device 20, and a downstream circuit 38 to recover and treat outcoming fluids 28A, 28B produced in the electrochemical stack device 20.

The upstream circuit 36 comprises pipes 32 and other fluid handling components connecting the water source 14 to the incoming fluid 26 inlet of the electrochemical stack device 20.

The upstream circuit 36 of the example of figure 1 will now be described.

It comprises a water supply pipe 32A connected to the fresh water source 14, a recycled water tapping 33 connecting the downstream circuit 38 to the water supply pipe 32A to receive electrolyte and/or recycled water from the downstream circuit 38.

The upstream circuit 36 further comprises an electrolyte tank 44 in which electrolyte is prepared and stored from the water supply pipe 32A, an electrolyte filter 46, in particular a Lye filter and an electrolyte supply pipe 32C connecting the electrolyte tank 44 to the electrolyte filter 46.

The upstream circuit 36 comprises, downstream of the electrolyte filter 46, an incoming fluid supply pipe 32D connecting the electrolyte filter 46 to the incoming fluid inlet of the electrochemical stack device 20.

The electrolyte tank 44 is a tank containing a concentrated electrolyte solution. The electrolyte is for example a potassium hydroxide solution with a concentration greater than 0.1 mol per liter of electrolyte or an alkali-hydroxide solution (NaOH, LiOH, CsOH) with a concentration greater than 0.1 mol per liter of electrolyte or the mixture of a solution of alkali hydroxide with a concentration greater than 0.1 mol per litter and an additive such as vanadium oxide (V2O5) for example with a concentration greater than 1 g per liter.

The electrolyte filter 46 is able to filter the electrolyte to remove solids, such as Lye precipitates, from the electrolyte. The filter is for example a Y-filter mounted with a sieve with a pore size less than 10 micrometers.

The downstream circuit 38 comprises pipes 32 and other fluid handling components connecting the outcoming fluids 28A, 28B outlets of the electrochemical stack device 20 to a recovery of dihydrogen 16 and dioxygen 18 in gaseous state.

The downstream circuit 38 of the example of figure 1 will now be described.

It comprises a dihydrogen separator 40 and a dihydrogen containing outcoming fluid recovery pipe 32E connecting the dihydrogen containing outcoming fluid 28A outlet of the electrochemical stack device 20 to the dihydrogen separator 40.

The dihydrogen separator 40 is a gas/liquid separator able to separate the dihydrogen containing outcoming fluid 28A into gaseous dihydrogen 16 and electrolyte and/or water to be recycled. The downstream circuit 38 hence comprises a dihydrogen recovery pipe 32G and a first recycle water pipe 32H tapped from the dihydrogen separator 40.

The first recycle water pipe 32H is connected to the water supply pipe 32A at the tapping 33.

The downstream circuit 38 also comprises a dioxygen separator 42 and a dioxygen containing outcoming fluid recovery pipe 32F connecting the dioxygen containing outcoming fluid 28B outlet of the electrochemical stack device 20 to the dioxygen separator 42.

The dioxygen separator 42 is a gas/liquid separator able to separate the dioxygen containing outcoming fluid 28B into gaseous dioxygen 18 and electrolyte and/or water to be recycled. The downstream circuit 38 hence comprises a dioxygen recovery pipe 321 and a second recycle water pipe 32J tapped from the dioxygen separator 42.

The second recycle water pipe 32J is connected to the water supply pipe 32A at the tapping 33.

According to the invention, the sensors 30 are placed at different specific regions 48 of the balance of plant 22, in the inner fluid handling volume 24 defined by pipes 32 or other fluid handling components.

The specific regions 48 are preferably placed at locations at risk for the formation of sludge or where the sludge formation is to be avoided.

Examples of specific regions 48 are represented on figure 1.

In the upstream circuit 36, at least a sensor 30 is for example placed in the water supply pipe 32A, for example upstream of the tapping 33, in the electrolyte supply pipe 32C, and/or in the incoming fluid supply pipe 32D.

At least a sensor 30 is for example placed in the electrolyte tank 44 and/or in the electrolyte filter 46.

In the downstream circuit 38, at least a sensor 30 is for example placed in the first recycle water pipe 32H or/and in the second recycle water pipe 32J.

At least a sensor 30 is for example placed in the dihydrogen separator 40 and/or the dioxygen separator 42.

The sensors 30 are each measuring information about the formation of sludge. The information representative of sludge formation advantageously comprises the detection of a fluid turbidity within the measured fluid. The measurement is carried out directly in the fluid circulating in the fluid handling volume 24 of the balance of plant 22, inside the pipes 32 and/or inside the other fluid handling components.

An example of sensor 30 configuration is shown in figure 3. The sensor 30 comprises at least one optical fiber probe 50, having a sensing region 52. The sensing region 52 is measuring at least an information representative of a sludge formation in the vicinity of the sensor 30.

The optical fiber probe 50 comprises a coating separating the inside of the optical fiber probe 50 from the measured fluid at which the optical fiber probe 50 is gathering information of the sludge formation.

The optical fiber probe 50 is cylindrical and oblong, defining a local axis A-A' for the sensing region 52.

The sensing region 52 of the optical fiber probe 50 is for example applied along a wall 54 of the pipe 32, the local axis A-A' of the sensing region 52 being substantially parallel to a local axis B-B' of the wall 54 (which here corresponds to the local axis B-B' of a pipe 32) at the location receiving the sensing region 52.

Such a positioning allows a very accurate detection of sludge at locations where the concentration of sludge is likely higher when it precipitates in the fluid.

Alternatively, the sensing region 52 of the optical fiber probe 50 is placed protruding from the wall 54.

The local axis A-A' of the sensing region 52 is inclined or orthogonal to the local axis B-B' of the wall 54 at the location receiving the sensing region 52.

Such a positioning may allow a detection of the accumulation of sludge at the specific region 48 by measuring the height at which sludge is present.

The optical fiber probe 50 is placed on the surface of the wall 54 most at risk to receive a deposition of sludge, for example at the bottom of a pipe 32.

In the case of a sensor 30 placed inside other fluid handling components, the sensor 30 is placed advantageously at the bottom of the tank and/or separator and/or filter, immerged in the fluid, where the formation of sludge is most at risk to happen.

The sensing region 52 of the optical fiber probe 50 is located inside the inner fluid handling volume 24 of the balance of plant 22, in contact with the fluid, for example incoming fluid 26. It is located outside of the electrochemical stack device 20.

The sensing regions 52 of the sensors 30 are placed at a distance of the electrodes of the electrochemical stack device 20 greater than 10 cm, in, particular greater than 1 m.

The optical fiber probe 50 comprises, connected to its sensing region 52, a light source generator providing an input light into the optical fiber probe 50. The optical fiber probe 50 emits an output light in response, reflecting the input light.

The sensor 30 further comprises a processing apparatus 56 to collect the output light, and process the signals in order to identify the amount of sludge in the vicinity of the sensor 30. In a preferred embodiment, the processing apparatus 56 comprises at least a processor and a memory comprising software modules able to be processed by the processor.

According to another embodiment, the optical fiber probe 50 works in a transmission mode. The optical fiber probe 50 comprises an optionally slanted grating. The reflected or the transmitted light is collected by the processing apparatus 56. The grating allows the optical fiber to interact with its surrounding environment and thus act as a sensor.

In a specific embodiment, the sensor 30 comprises an additional pressure sensor 58 and/or an additional temperature sensor 60 in the vicinity of the sensing region 52 to transmit information relative to temperature and/or pressure of the sensing region 52 to the processing apparatus 56.

An electrochemical process according to the invention is carried out as follows.

Electrolyte is provided to the inlet of the electrochemical stack device 20 through the incoming fluid supply pipe 32D using recycled water or electrolyte from the two separators 40, 42 provided by pipes 32J, 32H, and advantageously using fresh water provided by the water supply pipe 32A and/or using electrolyte supplied from the tank 44.

The electrolyte is conducted through the electrolyte supply pipe 32C to the electrolyte filter 46 before reaching the supply pipe 32D forming the incoming fluid 26 that is conveyed to the electrochemical stack device 20.

An electrical current is simultaneously supplied to the electrochemical stack device 20 and electrochemical reactions, as described above, occur within the stacks of cells of the electrochemical stack device 20 to convert the incoming fluid 26 into outcoming fluids 28A, 28B.

The outcoming fluids 28A, 28B from the electrochemical stack device 20 are respectively water containing dihydrogen and water containing dioxygen.

The water containing dihydrogen is conducted to the dihydrogen separator 40 through the recovery pipe 32E. In the dihydrogen separator, dihydrogen 16 in gas phase is separated from electrolyte and/or water to be recycled.

The dihydrogen separator 40 produces dihydrogen 16 which is fed to the pipe 32G for further treatment and/or use.

The electrolyte and/or the recycled water is then conveyed to the tapping 33 via the recycle pipe 32H.

Similarly, the water containing dioxygen is conducted to the dioxygen separator 42 through the recovery pipe 32F. In the dioxygen separator 42, dioxygen 18 in gas phase is separated from electrolyte and/or water to be recycled.

The dioxygen separator 42 produces dioxygen 18 which is fed to the pipe 32I for further treatment and/or use.

The electrolyte and/or the recycled water is then conveyed to the tapping 33 via the recycle pipe 32J.

A monitoring process according to the invention will now be described.

The process is carried by each sensor 30 inside the inner handling volume 24 in pipes 32, or in other fluid handling components.

The sensing region 52 measures at least an information representative of sludge formation in the vicinity of the sensing region 52 and transmits it to the processing apparatus 56. The information is in particular the detection of a turbidity within the measured fluid.

Preferably, the temperature and/or pressure are also measured in the vicinity of the sensing region via sensors 58, 60.

The processing apparatus 56 processes the information collected by the sensing region 52 and advantageously by the temperature and/or pressure sensors 58, 60 to determine a sludge concentration in the specific region 48 at the wall 54 or/and above the wall 54.

The processing apparatus 56 compares the sludge concentration with a predetermined alert threshold. If the predetermined threshold is reached, the formation of sludge may require an intervention and an alert may be sent to the operators of the installation 10.

In a second embodiment, represented in figure 2, the water electrolysis installation 110 is using a Proton Exchange Membrane (PEM) as the separator between the electrodes.

The Proton Exchange Membrane is embedded into the separator. It consists of a polymer that conducts protons. It may be for example based on Nafion: a perfluorosulfonic acid (PFSA) / polytetrafluoroethylene (PTFE) copolymer. The nature of the electrolyte is different: only water is circulating in the second embodiment.

The fluid handling components of the installation 110 are also partly different from the water electrolysis installation 10 shown in figure 1.

The upstream circuit 36 of the installation 110 differs in that the water supply pipe 32A opens in at least one of the separators 40, 42, here the dihydrogen separator 42. Fresh water is thus supplemented directly into the water to be recycled and is conveyed to the electrolyte supply pipe 32C via a recycle pipe 32H, 32J, here via the recycle pipe 32J.

The upstream circuit 36 is here without an electrolyte tank 44 and without an electrolyte filter 46.

The installation 110 further comprises additional fluid handling components which are polishing resins 162A to 162C.

The polishing resins 162A to 162C are configured to reduce the presence of metallic impurities in the fluid circulating through them.

The fluid passes through the polishing resin 162A to 162C to capture the metallic ions dissolved inside the fluid.

In the example of figure 2, a first polishing resin 162A is advantageously placed on the supply pipe 32A, downstream of the water source 14 and upstream of the dioxygen separator 42.

A second polishing resin 162B is placed on the recycle pipe 32J, downstream of the dioxygen separator and upstream of the tapping 33.

A third polishing resin 162C is interposed between the electrolyte supply pipe 32C and the incoming fluid supply pipe 32D upstream of the electrochemical stack device 20.

The downstream circuit 38 of the second water electrolysis installation 110 has a structure similar to the downstream circuit 38 of the first installation 10.

Just as in the first installation 10, sensors 30 are placed in separators 40, 42 and in pipes 32C, 32D, 32H and/or 32J (downstream of the polishing resin 162B). An additional sensor 30 is advantageously placed in the recycle pipe 32J, upstream of the polishing resin 162B.

No sensor 30 is placed in the supply pipe 32A.

The operation of the second water electrolysis installation 110 differs from the operation of the first installation 10 in that water from the water source 14 is cleaned by the first polishing resin 162A in the supply pipe 32A to the dioxygen separator 42.

The recycled water extracted from the dioxygen separator 42, advantageously supplemented by the water from the water source 14 passes through the second polishing resin 162B before being mixed with the recycled water extracted from the dihydrogen separator 40.

The fluid resulting from this mix in the electrolyte supply pipe 32C passes through another polishing resin 162C before being conveyed in the incoming fluid supply pipe 32D as an incoming fluid 26 into the electrochemical stack device 20.

The presence of the polishing resins 162A to 162C limits the chemical degradation of the proton exchange membrane by preventing the metallic impurities to get trapped by the membrane.

In another embodiment, at least a sensor 30 comprises at least two optical fiber probes 50 in cooperation. At least one optical fiber probe 50 has its sensing region 52 placed along a wall 54 of the pipe 32 or of another fluid handling component and at least one optical fiber probe 50 has its sensing region 52 protruding from the wall 54 in a direction transverse to the wall 54 local surface.

The processing apparatus 56 receives two types of information concerning the formation of sludge inside the measured fluid. The processing apparatus 56 of the sensor 30 is then able to detect with more accuracy the turbidity inside the measured fluid. The sensor 30 is more precise regarding the formation of sludge.

Thanks to the analysis of sludge formation inside the inner fluid handling volume 24 of the balance of plant 22, the water electrolysis installation 10, 110 is very safe. Indeed, the sludge formation is monitored in all fluids supplied to the electrochemical stack device 20 or recovered from the electrochemical stack device 20.

As soon as an increase of sludge concentration is detected anywhere in the balance of plant 22, an intervention can be carried out to prevent the sludge from affecting the electrochemical stack device 20 or/and to check a potential degradation of the electrochemical stack device 20.

The placement of sensors 30 outside of the electrochemical stack device 20 does not interfere with the electrochemical reactions occurring in the electrochemical stack device 20, improving the productivity of the installation. The monitoring solution relies on operando sensing and does not require to stop the electrochemical stack device 20.

Moreover, the electrochemical reactions do not interfere with the turbidity detection allowing for clearer results about the formation of sludge. The detection of turbidity is well related to the formation of sludge and easily detectable.

Having a sensing region 52 of a sensor 30 inside a pipe 32 or in another fluid handling component allow the monitoring of specific regions 48 where the formation of sludge is critical for the operation of the installation 10. Some fluid handling components are subject to the formation of sludge and monitoring them facilitates the scheduling of maintenance and cleaning interventions.

The sensors 30 can be used in all electrolyzer technologies.

In the above examples, the sensor 30 is placed in the balance of plant 22 at a distance from the electrochemical stack device 20. In a variant, the sensor 30 is placed inside the electrochemical stack device 20 immersed in the electrolyte and the temperature and/or pressure sensor 60, 58 are measuring the temperature and/or pressure inside the electrochemical stack device 20, in particular between the two electrodes.

In another example, the installation is a fuel cell installation.

In all cases, the processing apparatus 56 receiving information about the pressure and/or the temperature from the sensors 58, 60 allows for a more precise measure of the sludge formation.

Advantageously, this sensor 30 may be calibrated before being used. The output signal S(T,P,C) which may depend on the operating pressure (P), and/or operating temperature (T) and/or turbidity (C) is then corrected by the processing apparatus 56 to reflect only the changes in turbidity.

The calibration consists in measuring the output signal of solutions with different turbidity at a given set of pressure/temperature. This operation is repeated for various sets of pressures and temperatures (from P = 0.5 bar to P = 50 bars and from T = 5°C to T = 150°C for instance).

During the measurement, the processing apparatus 56 obtains the temperature T and/or the pressure P, from the pressure and/or temperature sensors 58, 60 and then measures the output signal of the optical fiber probe 50 and obtains the turbidity by comparing it to the calibration curve obtained at this pressure/temperature.

Another possibility is that the output signal S(T,P,C) can be split in different known functions: S(T,P,C) = S0 + S1(T - T0) + S2(P - P0) + S3(C) where S0 is a reference signal measured at a given temperature T0 and pressure P0 with no turbidity.

The functions S1(T), S2(P) and S3(C) can be for instance linear: S3(C) = A0 + B*C with A0 and B constants, exponential: S3(C) = A0 + A1exp(A2*C), or any mathematical function. In this case, the values of the constants of S1 (T), S2 (P) and S3(C) are entered in a memory of the processing apparatus 56. The processing apparatus 56 obtains the temperature T and the pressure P, from the pressure and temperature sensors 56, 60 and then measures the output signal of the optical fiber probe 50. The processing apparatus 56 then computes the values of S1 and S2 and deduces the value of S3(C) = S(T,P,C) - S0 + S1(T - T0) + S2(P - P0). Finally, the processing apparatus 56 determines the value of the turbidity C by using the reverse function of S3.

## Claims

1. - Sensor device for monitoring a water electrolysis installation (10, 110), to be placed inside a fluid of the water electrolysis installation (10, 110), the device comprising:
- at least one optical fiber probe (50) having a sensing region (52) to be placed inside the fluid;
- a light source apparatus providing an input light to the optical fiber probe (50);
- a processing apparatus (56) for processing an output light emitted by the optical fiber probe (50) after receiving the input light from the light source apparatus; **characterized by**:
- a temperature sensor (60) and/or a pressure sensor (58) located in the vicinity of the sensing region (52) to measure a temperature and/or pressure of the fluid in contact with the sensing region (52), the temperature sensor (60) and/or pressure sensor (58) being connected to the processing apparatus (56) for processing simultaneously the output light and the measured fluid temperature and/or pressure.

2. - Device according to claim 1, wherein the processing apparatus (56) measures at least an information representative of sludge formation in the vicinity of the optical fiber probe (50).

3. - Device according to claim 2, wherein the information representative of sludge formation is a fluid turbidity within the measured fluid.

4. - Device according to any one of the preceding claims, comprising at least two optical fiber probes (50), at least one optical fiber probe (50) having a local axis of its sensing region (52) inclined or orthogonal to a local axis of the sensing region (52) of at least one other optical fiber probe (50), the same processing apparatus (56) processing the output lights coming from the at least two optical fibers (50).

5. - Water electrolysis installation (10, 110) comprising:
- an electrochemical device comprising at least a stack having at least two electrodes immersed in an electrolyte that generates electricity from a chemical reaction or uses electrical energy to cause a chemical reaction and having at least a separator separating the two electrodes;
- a balance of plant (22) comprising fluid handling components including pipes (32) and tanks defining an inner fluid handling volume (24) of the balance of plant (22) to convey an incoming fluid (26) to the electrochemical device and to recover an outcoming fluid (28A, 28B) from the electrochemical device;
- the sensor device according to any one of the preceding claims.

6. - Installation (10, 110) according to claim 5, wherein the sensor device is located inside the inner fluid handling volume (24) of the balance of plant (22) outside of the electrochemical device.

7. - Installation according to claim 6, wherein the sensor device is placed at a distance of the electrodes of the electrochemical device greater than 10 cm, in particular greater than 1 m.

8. Installation according to claim 5, wherein the sensor device is placed inside the electrochemical device immersed in the electrolyte and the temperature and/or pressure sensor (60, 58) are measuring the temperature and/or pressure inside the electrochemical device, in particular between the two electrodes.

9. Method for monitoring the formation of sludge in a fluid of an installation (10, 110) according to any one of claims 5 to 8, the method comprising the steps of:
- sending an input light from the light source apparatus to the optical fiber probe (50);
- emitting back an output light from the optical fiber probe (50) to the processing apparatus (56);
- measuring the temperature and/or pressure with the temperature sensor (60) and/or the pressure sensor (58) and sending the information to the processing apparatus (56);
- processing the output light in the processing apparatus (56) using the measured temperature and/or the measured pressure to obtain an information representative of sludge formation in the fluid.
